# EUROPÄISCHE PATENTSCHRIFT

(11) **EP 2 337 717 B1**
(45) Veröffentlichungstag und Bekanntmachung des Hinweises auf die Patenterteilung: **21.11.2012**
(21) Anmeldenummer: 09778665.1
(22) Anmeldetag: 23.09.2009
(51) Int. Cl.: B60T 13/68, B60T 17/04

(54) **VENTILANORDNUNG ZUR BREMS- SOWIE ZUSATZGERÄTEANSTEUERUNG EINER PNEUMATISCHEN BREMSANLAGE EINES FAHRZEUGES**
VALVE ARRANGEMENT FOR CONTROLLING BRAKE DEVICES AND AUXILIARY DEVICES OF A PNEUMATIC BRAKE SYSTEM OF A VEHICLE
DISPOSITIF DE SOUPAPES POUR LA COMMANDE D'APPAREILS DE FREINAGE ET AUXILIAIRES D'UN SYSTÈME DE FREIN PNEUMATIQUE D'UN VÉHICULE MOTORISÉ

(30) Priorität: 23.09.2008 DE 102008048562
(43) Veröffentlichungstag der Anmeldung: 29.06.2011
(73) Patentinhaber: KNORR-BREMSE Systeme für Schienenfahrzeuge GmbH, 80809 München (DE)
(72) Erfinder: MANN, Hartmut, 85232 Bergkirchen (DE); KRASSELT, Steffen, 81927 München (DE); WACH, Jörg-Johannes, 81247 München (DE)
(74) Vertreter: Schönmann, Kurt
(86) Internationale Anmeldenummer: PCT/EP2009/006861
(87) Internationale Veröffentlichungsnummer: WO 2010/034476

(56) Entgegenhaltungen:
- EP-A2- 0 909 898
- EP-A2- 1 031 730
- EP-A2- 1 400 702
- WO-A1-2006/045489
- US-A- 5 988 766

## Beschreibung

Die Erfindung betrifft eine Ventilanordnung zur Brems- sowie Zusatzgeräteansteuerung einer pneumatischen Bremsanlage eines Fahrzeuges mit an mindestens einem gemeinsamen Trägermodul mit Druckluftkanälen lösbar angebrachtem, pneumatischen Steuerventil zur Durchführung von Brerns- oder Bremszusatzfunktionen der Bremsanlage.

Das Einsatzgebiet der vorliegenden Erfindung erstreckt sich vornehmlich auf den Schienenfahrzeugbau. Hier kommen pneumatische Bremsanlagen zum Einsatz, welche neben den normalen Bremsgeräten, wie Bremszylindern, auch Zusatzgeräte umfassen, wie Parkbremsen, Luftfederungen, Sandungseinrichtungen und dergleichen. Um solche Geräte nach Maßgabe einer übergeordneten Steuerung im Einklang mit den Bremsgeräten anzusteuern, werden vornehmlich pneumatische Steuerventile verwendet.

Aus der WO 2006 045489 A1 ist eine derartige Anordnung bekannt.

Aus der DE 1 905 561 U1 geht eine gattungsgemäße Ventilanordnung zur Brems- sowie Zusatzgeräteansteuerung hervor. Offenbart ist eine Bremsanlage für Schienenfahrzeuge mit einem an einem Trägermodul angeflanschten, vom Druck in der Hauptluftleitung gesteuerten Bremssteuerventil, das mit einem Hilfsluftbehälter und einem Bremszylinder in Verbindung steht. Von der Hauptluftleitung führt eine weitere Zweitleitung zu einem weiteren Trägermodul, dass über weitere Rohrleitungen mit einem ständig vom Druck im Hilfsluftbehälter beaufschlagten Rohranschluss im erstgenannten Trägermodul und mit einer Füllleitung in Verbindung steht. An diesem weiteren Trägermodul sind alle Zusatzgeräte der Druckluftbremse, hier eine Überwachungsvorrichtung mit Absperrhahn, Druckminderventil und Rückschlagventil für die Füllung des Hilfsluftbehälters aus der Füllleitung, eine elektrische Bremssteuervorrichtung und der Bremsbeschleuniger angeflanscht. Im Trägermodul befinden sich Luftführungskanäle, die die an dem Trägermodul angeflanschten Zusatzgeräte in schaltungsmäßig überlicher Weise in die Druckluftbremse einordnen. Die Anordnung der Zusatzgeräte am Trägermodul erlaubt es, diese mit nur geringfügigen Eingriffen in eine bereits vorhandene, die Hauptluftleitung, das erste Trägermodul, das Bremssteuerventil, den Hilfsluftbehälter, den Bremszylinder und entsprechende Verbindungsleitungen umfassende Druckluftbremse einzuordnen.

Nachteilhaft bei dieser technischen Lösung ist in fertigungstechnischer Hinsicht, dass die mit den internen Kanälen zu versehenden Trägermodule in aufwendiger Weise in Bohr- oder Frästafelausführung hergestellt werden. Ein Austausch von an das Trägermodul angeflanschten pneumatischen Steuerventilen und dergleichen erfordert das aufwendige Lösen mehrerer Schraubverbindungen; eine üblicherweise vorgesehene Flachdichtung ist bei einer Demontage meist zu erneuern. Jedes Trägermodul ist nach der Bauform der hieran angeflanschten Steuerventile entsprechend des Kundenwunsches zu konstruieren. Dies führt zu einer hohen Variantenvielfalt an Trägermodulen.

Es ist die Aufgabe der vorliegenden Erfindung eine Ventilanordnung zur Brems- sowie Zusatzgeräteansteuerung einer pneumatischen Bremsanlage dahingehend weiter zu verbessern, dass die einzelnen pneumatischen Steuerventile in einfacher Weise austauschbar mit universell verwendbaren Trägermodulen zusammenwirken.

Die Aufgabe wird ausgehend von einer Ventilanordnung gemäß dem Oberbegriff von Anspruch 1 in Verbindung mit dessen kennzeichnenden Merkmalen gelöst. Die nachfolgenden abhängigen Ansprüche geben vorteilhafte Weiterbildungen der Erfindung wieder.

Die Erfindung schließt die technische Lehre ein, dass mehrere aneinandergereihte blockförmige Trägermodule mindestens gleicher Höhen- und Tiefenabmessung vorgesehen sind, welche Kanalabschnitte aufweisen, die durch eine Aneinanderreihung allen Trägermodule gemeinsame Längskanäle ergeben, wobei an einer Frontseite jedes Trägermoduls mindestens eine Einheitsbohrung zur Aufnahme eines als Patronenventil ausgebildeten Steuerventils angeordnet ist, das den Druckluftfluss zwischen internen Kanälen schaltet.

Der Vorteil der erfindungsgemäßen Lösung liegt insbesondere darin, dass die speziell als Patronenventil ausgebildeten Steuerventile auf dieselben äußeren geometrischen Abmessungen genormt sind, so dass diese sich in einfacher Weise gegeneinander austauschen lassen. Auch die blockförmigen Trägermodule sind untereinander austauschbar, so dass insgesamt ein hoher Grad an Modularität erzielt wird. Die zur Aufnahme der Patronenventile vorgesehen Einheitsbohrung gestattet es, Patronenventile unterschiedlichster Ventilfunktion in ein und demselben Trägermodul einzubringen. Dadurch wird es möglich, mit wenigen Trägermodulen eine maximale Bestückungsvarianz und somit eine maximale Anzahl von Funktionen zu realisieren. Durch die gleichen Höhen- und Tiefenabmessungen lässt sich, eine Blockform ergebene lückenlose Aneinnanderreihung realisieren. Die Breitenabmessungen von Trägermodulen können dagegen in wenigen Varianten variieren, um über die Breite der Trägermodule den Bauraum für klein- oder großbauende Patronenventile bereitzustellen. Hierdurch lässt sich ein weites Spektrum an Durchflussraten abdecken.

Die erfindungsgemäßen Trägermodule können durch die gemeinsamen Längskanäle an einer einzigen Steuerdruckwelle angeschlossen werden. Dies erspart gegenüber dem Stand der Technik Verrohrungsaufwand. Ventile zur Brems- sowie Zusatzgeräteansteuerung können in baugleichen Trägermodulen aneinandergereiht sehr kompaktbauend zu einer Ventilanordnung gefügt werden.

Gemäß einer die Erfindung verbessernden Maßnahme wird vorgeschlagen, dass neben den Einheitsbohrungen die blockförmigen Trägermodule auch mit einheitlich eingebrachten internen Kanälen zur Druckluftführung ausgeführt sind. Dies bedeutet, dass die Kanalführung der Trägermodule stets identisch ist oder sich in nur wenigen Varianten unterscheidet. Ein Verlauf zur Anpassung an gewünschte Brems- oder Bremszusatzfunktionen je nach gewählter Bestimmung der Steuerventile kann dabei über Stopfenelemente erzielt werden, die in die internen Kanäle als Absperrelement, Trennelement und dergleichen eingebracht werden können. Durch die Stopfenelemente sind die Trägermodule mit gleicher Kanalführung in einfacher Weise unterschiedlich konfigurierbar.

Das Trägermodul mit Steuerventilen in Form von Mehrwege-Schaltventilen, wie 3/2-Venilen oder 3/3-Ventilen, oder auch Rückschlagventilen wird vornehmlich zur Durchführung von Bremsfunktionen verwendet. Für die Durchführung von Bremszusatzfunktionen werden neben den vorstehend genannten Ventilarten auch Druckschalter oder Druckminderventile verwendet, beispielsweise im Rahmen eines Filtermoduls.

Das erfindungsgemäße Trägermodul besteht in einer bevorzugten Ausführungsform aus Leichtmetall, vorzugsweise Leichtmetallguss, worin sich die internen Kanäle durch Bohren einbringen lassen. Es ist jedoch auch möglich, die Kanäle zumindest teilweise gusstechnisch herzustellen. Neben dieser Variante ist es auch denkbar, das Trägermodul aus speziellem Kunststoffen spritzgießtechnisch herzustellen, welche jedoch den Anforderungen und Normen im Schienenfahrzeugbau zu genüge haben.

Gemäß einer anderen die Erfindung verbessernden Maßnahme wird vorgeschlagen, die aneinandergereihten Trägermodule über mehrere längslaufende Zuganker aneinander zu fixieren. Hierdurch lassen sich die Trägermodule nach Entfernen der Zuganker in einfacher Weise zerlegen.

Einandergereihte Trägermodule können nach einer anderen die Erfindung verbessernden Maßnahme über je quer zu den Zugankern verlaufenden Befestigungsschrauben mit der der Frontseite gegenüberliegenden Seite lösbar an einer gemeinsamen Trägerplatte angebracht werden. Die Trägerplatte kann rückwärtig einer arbeitsleitungsseitigen Anschluss über weiterer Verbindungsrohre mit den Brems- sowie Zusatzgeräten aufweisen. Daneben ist es auch denkbar, die Trägerplatte mit einem zentralen Hauptbehälteranschuss zur gemeinsamen Druckluftversorgung aller Trägermodule, also eines ihrer Längskanäle, auszustatten.

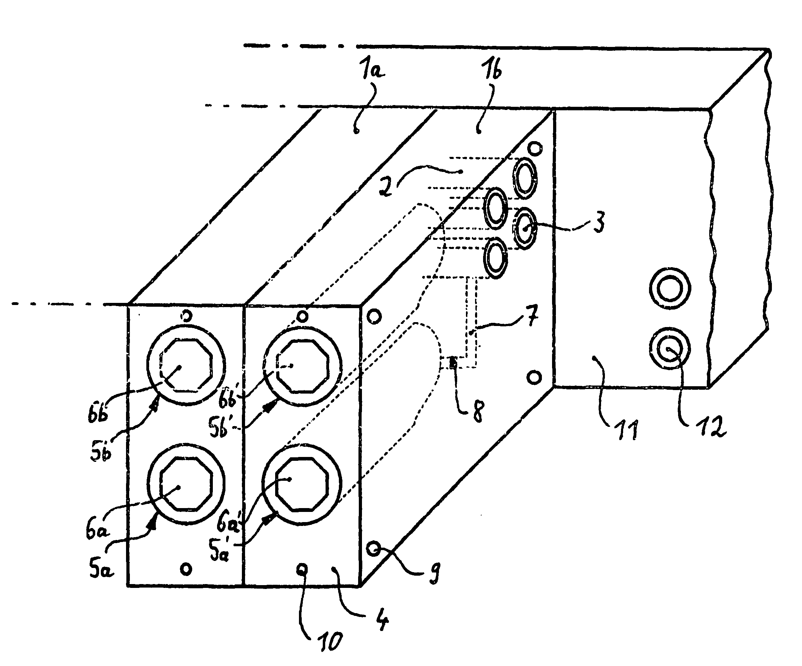

Weitere, die Erfindung verbessernden Maßnahmen werden nachstehend gemeinsam mit der Beschreibung eines bevorzugten Ausführungsbeispiels der Erfindung anhand der einzigen Figur näher dargestellt. Die Figur zeigt eine perspektivische schematische Ansicht einer aus mehreren Trägermodulen bestehenden Ventilanordnung.

Die Ventilanordnung umfasst hier zwei exemplarische Trägermodule 1a und 1b, die erkennbar mit gleicher Höhen- und Tiefenabmessung versehen sind und auch hier von gleicher Breite sind. Die Trägermodule 1a und 1b weisen Kanalabschnitte 2 auf, welche durch Aneinanderreihung gemeinsame Längskanäle 3 bilden. Die internen Kanäle (Schichtlinien schematisch) stehen mit an einer Frontseite 4 jedes Trägermoduls 1a und 1b angebrachten Einheitsbohrungen 5a und 5b in Verbindung. Die beiden Einheitsbohrungen 5a und 5b dienen der Aufnahme von als Patronenventile ausgebildeten Steuerventilen 6a bzw. 6b, um den Druckluftfluss zwischen den internen Drickluftkanälen 7 zu schalten.

Die beiden Trägermodule 1aund 1b weisen einheitlich eingebrachte internen Kanäle auf, wogegen die Steuerventile 6a, 6b unterschiedlich sind. Ein Stopfenelement 8 gestattet die Anpassung der Kanalführung an die Ventilfunktion.

Während das Trägermodul 1a mit Steuerventilen 6a, 6b in Form von Mehrwege-Schaltventilen ausgestattet ist, ist das andere Trägermodul 1b in diesem Ausführungsbeispiel mit Steuerventilen 6a', 6b' in Form von Druckschaltern ausgestattet.

Die aneinandergereihten Trägermodule 1a und 1b sind über mehrere längsverlaufende Zuganker 9 aneinander befestigt. Dagegen dienen Befestigungsschrauben 10, welche von der Frontseite 4 der Trägermodulen 1a und 1b aus eingeschraubt sind zur Befestigung an einer gegenüberliegenden Trägerplatte 11. Die Trägerplatte 11 verfügt daneben über einen zentralen Luftanschluss 12 zur gemeinsamen Druckluftversorgung aller Trägermodule 1a, 1b, welche soweit im Kontaktbereich zur Trägerplatte 11 hin mit entsprechend abgedichteten Öffnungen versehen sind.

### Bezugszeichenliste

- 1: Trägermodul
- 2: Kanalabschnitt
- 3: Längskanal
- 4: Frontseite
- 5: Einheitsbohrung
- 6: Steuerventil
- 7: Druckluftkanal
- 8: Stopfenelement
- 9: Zuganker
- 10: Befestigungsschraube
- 11: Trägerplatte
- 12: Luftanschluss

## Patentansprüche

1. Ventilanordnung zur Brems- sowie Zusatzgeräteansteuerung einer pneumatischen Bremsanlage eines Fahrzeuges mit an mindestens einem gemeinsamen Trägermodul (1a, 1b) mit Druckluftkanälen (7) lösbar angebrachten pneumatischen Steuerventilen (6a, 6b) zur Durchführung von Brems- oder Bremszusatzfunktionen der Bremsanlage, wobei mehrere aneinandergereihte blockförmige Trägermodule (1a, 1b) mindestens gleicher Höhen- und Tiefenabmessung vorgesehen sind, welche Kanalabschnitte (2) aufweisen, die durch Aneinanderreihung allen Trägermodulen (1a, 1b) gemeinsame Längskanäle (3) ergeben, **dadurch gekennzeichnet, dass** an einer Frontseite (4) jedes Trägermoduls (1a, 1b) mindestens eine Einheitsbohrung (5a, 5b) zur Aufnahme eines als Patronenventil ausgebildeten Steuerventils (6a, 6b) angeordnet ist, um den Druckluftfluss zwischen internen Kanälen zu schalten.

2. Ventilanordnung nach Anspruch 1,
**dadurch gekennzeichnet, dass** die blockförmigen Trägermodule (1a, 1b) mit einheitlich eingebrachten internen Kanälen zur Druckluftführung ausgeführt sind, deren Verlauf zur Anpassung an eine gewünschte Brems- oder Bremszusatzfunktionen je nach gewählter Bestückung mit Steuerventilen (6a, 6b) über Stopfenelemente (8) konfigurierbar ist.

3. Ventilanordnung nach Anspruch 1,
**dadurch gekennzeichnet, dass** das Trägermodul (1a) mit Steuerventilen (6a, 6b) in Form von Mehrwege-Schaltventilen oder Rückschlagventilen zur Durchführung einer Bremsfunktion ausgestattet ist.

4. Ventilanordnung nach Anspruch 1,
**dadurch gekennzeichnet, dass** das Trägermodul (1b) mit Steuerventilen (6a`, 6b') in Form von Mehrwege-Schaltventilen, Druckschaltern oder Druckminderventilen zur Durchführung einer Bremszusatzfunktion ausgestattet ist.

5. Ventilanordnung nach Anspruch 1,
**dadurch gekennzeichnet, dass** das Trägermodul (1a, 1b) aus Leichtmetallguss besteht, wobei die internen Kanäle (2, 3, 7) gebohrt ausgeführt sind.

6. Ventilanordnung nach einem der vorstehenden Ansprüche,
**dadurch gekennzeichnet, dass** die aneinandergereihten Trägermodule (1a, 1b) über mehrere längs verlaufende Zuganker (9) aneinander fixiert sind.

7. Ventilanordnung nach einem der vorstehenden Ansprüche,
**dadurch gekennzeichnet, dass** die aneinandergereihten Trägermodule (1a, 1b) über je quer verlaufende Befestigungsschrauben (10) mit der der Frontseite (4) gegenüberliegenden Seite lösbar an einer gemeinsamen Trägerplatte (11) angebracht sind.

8. Ventilanordnung nach einem der vorstehenden Ansprüche,
**dadurch gekennzeichnet, dass** die Trägerplatte (11) einen zentralen Luftanschluss (12) zur gemeinsamen Druckluftversorgung aller Trägermodule (1a, 1b) aufweist.

## Claims

1. Valve arrangement for controlling brake and auxiliary devices of a pneumatic brake system of a vehicle, with pneumatic control valves (6a, 6b) fixed detachably on at least one common supporting module (1a, 1b) having compressed air ducts (7) for carrying out braking or supplementary braking functions of the brake system, wherein a plurality of block-shaped supporting modules (1a, 1b) connected in series and having at least equal height and depth dimensions are provided. which comprise duct sections (2) that produce conjoint longitudinal ducts (3) by virtue of the series connection of all the supporting modules (1a, 1b),
**characterised in that** on a front side (4) of each supporting module (1a, 1b) there is formed at least one standard bore (5a, 5b) designed to receive a control valve (6a, 6b) formed as a cartridge valve, in order to switch the compressed air flow between internal ducts.

2. Valve arrangement according to Claim 1,
**characterised in that** the block-shaped supporting modules (1a, 1b) are made with uniformly formed internal ducts for directing compressed air, whose course can be configured by means of plug elements (8) so as to adapt them to a desired braking or supplementary braking function depending on the chosen provision with control valves (6a, 6b).

3. Valve arrangement according to Claim 1,
**characterised in that** the supporting module (1a) is fitted with control valves (6a, 6b) in the form of multi-channel switching valves or non-return valves for carrying out a braking function.

4. Valve arrangement according to Claim 1,
**characterised in that** the supporting module (1b) is fitted with control valves (6a', 6b') in the form of multi-channel switching valves, pressure switches or pressure-reducing valves for carrying out a supplementary braking function.

5. Valve arrangement according to Claim 1,
**characterised in that** the supporting module (1a, 1b) consists of a light metal casting, in which the internal ducts (2, 3, 7) are produced by boring.

6. Valve arrangement according to any of the preceding claims,
**characterised in that** the supporting modules (1a, 1b) connected in series are held together by a plurality of tie-rods (9) which extend longitudinally.

7. Valve arrangement according to any of the preceding claims,
**characterised in that** the supporting modules (1a, 1b) are fixed detachably to a common support plate (11) on the side opposite to the front side (4), in each case by means of respective fixing screws (10) that extend transversely.

8. Valve arrangement according to any of the preceding claims,
**characterised in that** the support plate (11) comprises a central air connection for the conjoint supply of compressed air to all the supporting modules (1a, 1b).

## Revendications

1. Agencement de vanne pour la commande d'appareils de freinage et auxiliaires d'un système pneumatique de freinage d'un véhicule, comprenant des vannes (6a, 6b) pneumatiques de commande, montées de manière amovible sur au moins un module (1a, 1b) de support commun ayant des canaux (7) pour de l'air comprimé pour réaliser des fonctions de freinage ou des fonctions auxiliaires de freinage du système de frein, dans lequel il est prévu plusieurs modules (1a, 1b) de support en forme de bloc, rangés les uns à côté des autres, au moins de mêmes dimensions en hauteur et en profondeur et qui ont des tronçons (2) de canal qui, par le fait que tous les modules (1a, 1b) de support sont rangés les uns à côté des autres, donnent des canaux (3) longs communs, **caractérisé en ce que** sur un côté (4) avant de chaque module (1a, 1b) de support est ménagé au moins un trou (5a, 5b) d'unité, pour la réception de la vanne (6a, 6b) de commande constituée en vanne cartouche afin de commuter le flux d'air comprimé entre des canaux internes.

2. Agencement de vanne suivant la revendication 1, **caractérisé en ce que** les modules (1a, 1b) de support en forme de bloc sont réalisés par des canaux internes de conduite d'air comprimé, qui sont ménagés de manière unitaire et dont le tracé peut, pour l'adaptation à une fonction souhaitée de freinage ou de freinage auxiliaire, être configuré par des éléments (8) de bouchon suivant l'implantation sélectionnée en vanne (6a, 6b) de commande.

3. Agencement de vanne suivant la revendication 1, **caractérisé en ce que** les modules (1a, 1b) de support ayant des vannes (6a, 6b) de commande sont sous la forme de vannes pilotes à plusieurs voies ou de clapets anti-retours pour effectuer une fonction de freinage.

4. Agencement de vanne suivant la revendication 1, **caractérisé en ce que** le module (1a, 1b) de support ayant des vannes (6a', 6b') de commande est sous la forme de vannes pilotes à plusieurs voies, d'interrupteurs manométriques ou de vannes d'abaissement de la pression pour réaliser une fonction auxiliaire de freinage.

5. Agencement de vanne suivant la revendication 1, **caractérisé en ce que** le module (1a, 1b) de support est en métal léger coulé, les canaux (2, 3, 7) internes étant réalisés par alésage.

6. Agencement de vanne suivant l'une des revendications précédentes, **caractérisé en ce que** les modules (1a, 1b) de support rangés les uns à côté des autres peuvent être immobilisés les uns par rapport aux autres par plusieurs tirants (9) s'étendant longitudinalement.

7. Agencement de vanne suivant l'une des revendications précédentes, **caractérisé en ce que** les modules (1a, 1b) de support rangés les uns à côté des autres sont mis de manière amovible sur un plateau (11) de support commun par le côté opposé au côté (4) avant, par l'intermédiaire respectivement de vis (10) de fixation s'étendant transversalement.

8. Agencement de vanne suivant l'une des revendications précédentes, **caractérisé en ce que** le plateau (11) de support a un raccord (12) central pour de l'air pour l'alimentation commune en air comprimé de tous les modules (1a, 1b) de support.
